# EUROPEAN PATENT SPECIFICATION

(11) **EP 0 369 798 B1**
(45) Date of publication and mention of the grant of the patent: **12.10.1994**
(21) Application number: 89311899.2
(22) Date of filing: 16.11.1989
(51) Int. Cl.: B60J 10/06

(54) **Four-sided flush glass assembly**
Scheibenausbildung mit vier aufliegenden Rändern
Montage pour fenêtre à glace effleurante sur les quatre côtés

(30) Priority: 16.11.1988 US 272566
(43) Date of publication of application: 23.05.1990
(60) Divisional application: 94105257.3
(73) Proprietor: THE STANDARD PRODUCTS COMPANY, Cleveland Ohio 44102 (US)
(72) Inventor: Vaughan, Robert Albert, Dearborn Michigan 48124 (US); Keys, James Frederick, West Bloomfield Michigan 48013 (US); Belser, John William, Northville Michigan 48167 (US)
(74) Representative: Jones, Michael Raymond

(56) References cited:
- EP-A- 0 061 027
- EP-A- 0 068 367
- EP-A- 0 308 377
- DE-A- 3 236 168
- DE-A- 3 313 658
- DE-A- 3 737 736
- FR-A- 2 551 826
- FR-A- 2 575 428
- PATENT ABSTRACTS OF JAPAN vol. 9, no. 213 (M-408)(1936) 30 August 1985,& JP-A-60 71324

## Description

The present invention relates to weather stripping gasket assemblies and, more particularly, to a weather stripping gasket assembly that, when positioned on a vehicle, provides the vehicle window panes with a peripheral flush appearance with the vehicle body.

In the automotive industry, it is desirable to have movable window panes which are flush with the vehicle body roof, door and side pillars. This flushness, while providing an aesthetic appearance, also provides aerodynamic characteristics and reduces drag. When providing movable window panes that are peripherally flush with the vehicle body, the sealing of the window pane must be taken into consideration. In a peripheral or four-sided flush movable window pane system, the weather stripping is substantially behind or on the interior of the window pane concealed from view from the outside of the vehicle (see e.g. figure 3 of EP-A-0061027). Such strips are known on vehicle doors having a frame wherein a large part of the strip is concealed behind the frame.

Weather stripping currently utilized by the automotive industry for movable window panes has a U-shaped glass run channel. The U-shaped channel sandwiches the window pane periphery between the legs and web of the U-shaped channel to retain and seal the window (see e.g. FR-A-2551826). These types of glass run channel systems also have a portion of the weather stripping or a moulding on the exterior or outside of the window pane.

DE-A-3236168 discloses a sealing system for a door without a window frame having retaining means to retain the weather strip on a flange and means for sealing and spacing of the window pane from the surrounding body.

Accordingly, the present invention provides the art with a weather stripping system for movable vehicle window panes which enable the windows to be peripherally flush with the vehicle body. The present invention provides the art with a weather stripping system that is substantially concealed from view by the movable window panes in a closed position.

According to the present invention, there is provided a sealing system intended to support and seal a window pane of a vehicle door in which the door is not provided with a window frame, the sealing system comprising a side weather strip having:
retaining means adapted to retain the weather strip on a flange extending about an opening on the vehicle in a direction generally parallel with the window pane, said retaining means including a flange-receiving channel adapted to receive the flange, a window pane-retaining means adapted to retain and seal a window pane, said window pane-retaining means including a window member-receiving channel adapted to receive a window member secured to the window pane; and
sealing means for providing sealing and spacing between the perimeter of the window pane and the opening to prohibit contact of the window pane and the opening, characterised in that:
said window member-receiving channel is positioned generally perpendicularly to said flange-receiving channel and the plane of said window pane such that said window pane-retaining means is substantially concealed from view when coupled with the window pane in a closed position; and in that
the sealing means comprises a bead adapted to surround the perimeter of the window pane in a first position in which the vehicle door is closed but no longer surrounds the perimeter when the pane is outwardly moved to a second position in which the vehicle door is opened.

Further developments in line with the invention as defined in claim 1 are referred to in the dependent claims 2 to 5.

For a better understanding of the present invention and to show how the same may be carried into effect, reference will now be made, by way of example, to the accompanying drawings, in which:-
Figure 1 is a side elevation view of a vehicle embodying a weather stripping gasket system in accordance with the present invention;
Figure 2 is a vertical cross-section view through a plane defined by line 2-2 of Figure 1;
Figure 3 is a horizontal cross-section view through a plane defined by line 3-3 of Figure 1;
Figure 4 is an enlarged view of Figure 3 within circle 4;
Figure 5 is a vertical cross-section view through the plane defined by line 5-5 of Figure 1;
Figure 6 is a horizontal cross-sectional view through the plane defined by line 6-6 of Figure 1.

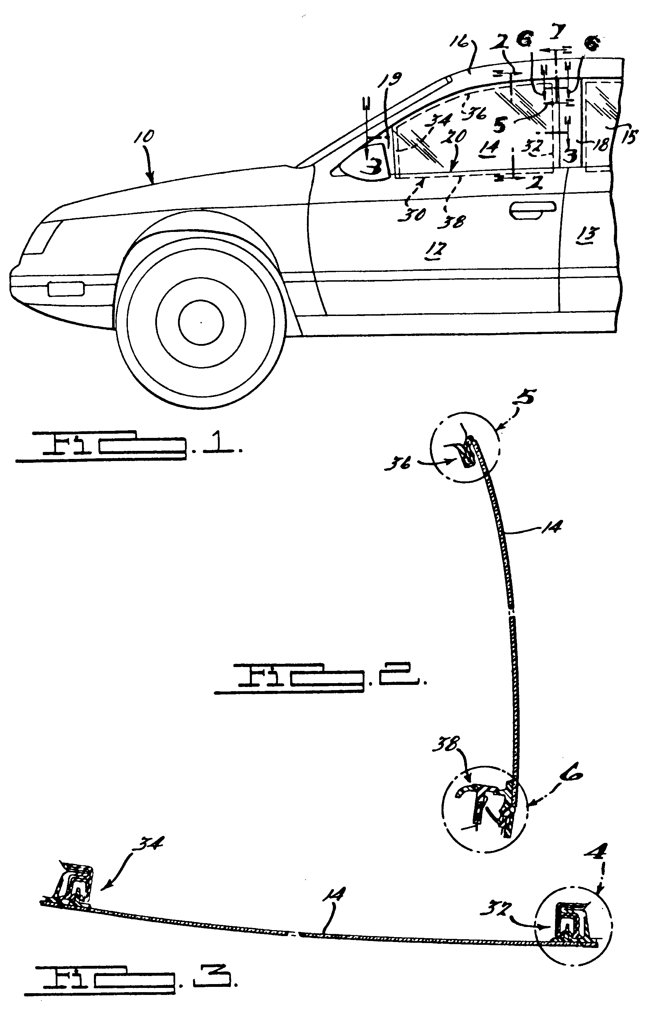

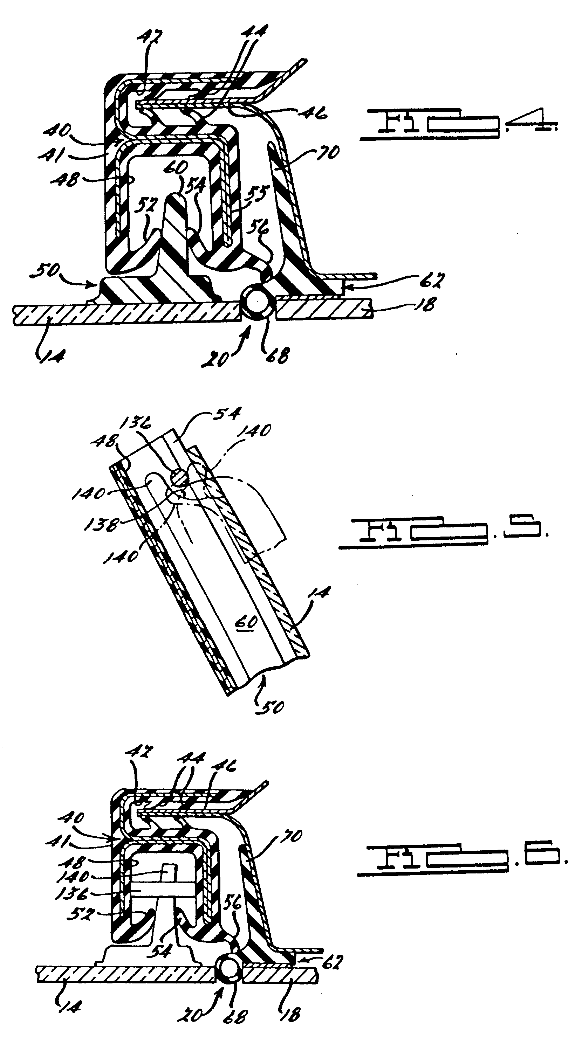

Turning to the figures, particularly Figure 1, a vehicle 10 is illustrated with the weather stripping gasket assembly of the present invention. The vehicle 10 includes doors 12 and 13, windows 14 and 15, and roof 16. As can be seen from Figures 1-3, the windows 14 and 15 are substantially flush with the vehicle doors 12, 13, roof 16 and side and mirror panels 18 and 19. A small elastomeric bead 20, secured to the weather stripping gasket assembly, defines an outline of the periphery of the windows 14 and 15, provides an elastomeric seal and spaces the windows 14 and 15 from the sheet metal of the doors 12 and 13, roof 16 and the side and mirror panels 18 and 19.

The weather stripping gasket assembly 30 is adapted to be secured about an opening in the vehicle 10. The weather stripping gasket assembly 30 is generally comprised of four separate and distinct portions forming the gasket system 30. The portions are side pillar members 32 and 34, top header member 36 and bottom member 38. The side members 32 and 34, top member 36 and bottom member 38 may be integrally formed as a single unit or nay be positioned individually onto the vehicle 10.

The side members 32 and 34 are substantially identical and the following discussion will relate to both. Turning to Figure 4, a cross-section view of the side pillar members 32 and 34 is illustrated. The side pillar member weather strip 32, 34 includes a metallic reinforcement member 40 surrounded by an integral elastomeric skin 41. In cross-section, the reinforcement member 40 includes a first U-shaped channel 42 having elastomeric fingers 44 extending from skin 41 into the interior of the channel 42. The fingers 44 secure the weather stripping 32, 34 onto a flange 46 about the opening on the vehicle 10.

A second U-shaped channel 48 of the reinforcement member 40, positioned transverse to the first U-shaped channel 42, is adapted to receive a member 50 secured to the window 14. The second U-shaped channel 48 generally has a pair of fingers 52 and 54 projecting from the skin 41 into the channel 48 to sealably contact member 50, as seen in Figure 4. A sealing flange 56 extends from the skin 41 at the end of one of the legs 55 of the U-shaped channel 48 to enhance the seal of the weather stripping 32, 34 with the vehicle opening.

The member 50 is ordinarily elastomeric and adhesively secured or the like to the windows 14 and 15. The member 50 is generally T-shaped or L-shaped, having its vertical tail 60 received in the U-shaped channel 48 of the weather stripping 32, 34. A second elastomeric T-shaped member 62 is adhesively secured to the side panel 18 or the mirror panel 19, as seen in Figures 3 and 4. The T-shaped member 62 includes a member 68 which forms a portion of the peripheral bead 20. The vertical tail 70 of the T-shaped member 62 abuts the vehicle opening and is contacted by the sealing flange 56 to provide further sealing of the windows 14 and 15 with the vehicle body.

The above-described system is generally used on a hard top type vehicle. The hard top vehicles enable the window members 50, and thus the windows 14 and 15, to be removed from the U-shaped receiving channels 48 of side members 32 and 34 when the doors 12 and 13 are opened. Thus, the windows 14 and 15 would extend freely from the doors 12 and 13 when the doors 12 and 13 are open.

A clip mechanism 134 is utilized to retain the windows 14 and 15 in a sealed position when the doors 12 and 13 are closed. Turning to Figures 5 and 6, a pin 136 is illustrated traversing the U-shaped channel 48 of the side member 32 near the junction of the side member 32 and top member 36. A cutout portion 138 is formed in the T-shaped member 50 at its upper end. The cutout portion 138 includes a tail 140 at the free extending end of the member 50. The tail 140 resiliently deflects to enable the tail 140 to be positioned behind the pin 136 when the window is in a closed position, as seen in Figure 5. The tail 140 deflects, enabling the window 14 to be moved away from the pin 136 when the door is opened and deflects upon returning to its first position, as seen in phantom in Figure 5. Also, as the vehicle travels, the pin 136 retains the tail 140 in position so that the window does not blow out or move away from a sealing contact with channel 48 during travel of the vehicle. Alternatively, tail 140 can be a rigid member which is adjusted into position by a camming up action during door closure.

## Claims

1. A sealing system intended to support and seal a window pane (14, 15) of a vehicle door (12, 13) in which the door (12, 13) is not provided with a window frame, the sealing system comprising a side weather strip (32, 34) having:
retaining means adapted to retain the weather strip on a flange extending about an opening on the vehicle in a direction generally parallel with the window pane (14, 15), said retaining means including a flange-receiving channel (42) adapted to receive the flange (46), a window pane-retaining means adapted to retain and seal a window pane (14), said window pane-retaining means including a window member-receiving channel (48) adapted to receive a window member (50) secured to the window pane (14); and
sealing means (20) for providing sealing and spacing between the perimeter of the window pane (14) and the opening to prohibit contact of the window pane (14) and the opening, characterised in that:
said window member-receiving channel (48) is positioned generally perpendicularly to said flange-receiving channel (42) and the plane of said window pane (14) such that said window pane-retaining means is substantially concealed from view when coupled with the window pane (14) in a closed position, and in that
the sealing means (20) comprises a bead adapted to surround the perimeter of the window pane (14) in a first position in which the vehicle door (12, 13) is closed but no longer surrounds the perimeter when the pane (14) is outwardly moved to a second position in which the vehicle door (12, 13) is opened.

2. A sealing system according to claim 1, wherein the retaining means is adapted to retain the weather strip (32, 34) on a single end flange (46), and wherein the retaining means includes a single flange receiving channel (42).

3. A system according to claim 1 or 2, further comprising a reinforcement member (40) and an elastomeric skin (41) surrounding said reinforcement member (40), said reinforcement member (40) and elastomeric skin (41) forming said flange receiving channel (42) and said window member receiving channel (48).

4. A system according to claim 3, wherein said retaining means comprises one or more fingers (44) extending from said skin (41) of said flange-receiving channel (42), said fingers (44) adapted to contact said flange (46) to retain said weather strip on said flange (46).

5. A system according to claim 3 or 4, wherein said window member-receiving channel (48) comprises a pair of fingers (52, 54) extending from said skin (41) from opposing sides of said channel (48), said fingers (52, 54) being adapted to contact and seal the member (50).

## Patentansprüche

1. Dichtungssystem zum Abstützen und Abdichten einer Fensterscheibe (14, 15) einer Fahrzeugtür (12, 13), bei dem die Tür (12, 13) nicht mit einem Fensterrahmen versehen ist, wobei das Dichtungssystem eine seitliche Dichtung (32, 34) aufweist, die versehen ist mit:
Haltemitteln zum Halten der Dichtung an einem Flansch, der um eine Fahrzeugöffnung herum in einer Richtung im wesentlichen parallel zu der Fensterscheibe (14, 15) verläuft, wobei die Haltemittel einen flanschaufnehmenden Kanal (42) zur Aufnahme des Flansches (46) und Fensterscheibenhaltemittel zum Halten und Abdichten einer Fensterscheibe (14) aufweisen, wobei die Fensterscheibenhaltemittel einen fensterteilaufnehmenden Kanal (48) zur Aufnahme eines an der Fensterscheibe (14) befestigten Fensterteils (50) umfassen, und
Dichtungsmitteln (20) zum Herstellen einer Abdichtung und eines Abstandes zwischen dem Umfang der Fensterscheibe (14) und der Öffnung, um dadurch eine Berührung zwischen der Fensterscheibe (14) und der Öffnung zu verhindern,
dadurch gekennzeichnet, daß
der fensterteilaufnehmende Kanal (48) im wesentlichen senkrecht zu dem flanschaufnehmenden Kanal (42) und der Ebene der Fensterscheibe (14) so angeordnet ist, daß die Fensterscheibenhaltemittel im wesentlichen der Sicht verdeckt sind, wenn sie in einer geschlossenen Stellung mit der Fensterscheibe (14) verbunden sind, und daß
die Dichtmittel (20) einen Wulst aufweisen, der den Umfang der Fensterscheibe (14) in einer ersten Stellung, in der die Fahrzeugtür (12, 13) geschlossen ist, umgibt, den Umfang jedoch nicht länger umgibt, wenn die Scheibe (14) nach außen in eine zweite Stellung bewegt wird, in der die Fahrzeugtur (12, 13) geöffnet ist.

2. Dichtungssystem nach Anspruch 1, bei dem die Haltemittel so ausgebildet sind, daß sie die Dichtung (32, 34) an einem einzelnen Endflansch (46) halten, und bei dem die Haltemittel einen einzigen flanschaufnehmenden Kanal (42) aufweisen.

3. System nach Anspruch 1 oder 2, mit einem Verstärkungsteil (40) und einer elastomeren Haut (41), die das Verstärkungsteil (40) umgibt, wobei das Verstärkungsteil (40) und die elastomere Haut (41) den flanschaufnehmenden Kanal (42) und den fensterteilaufnehmenden Kanal (48) bilden.

4. System nach Anspruch 3, bei dem die Haltemittel aus einem oder mehreren Fingern (44) bestehen, die sich von der Haut (41) des flanschaufnehmenden Kanals (42) weg erstrecken, wobei die Finger (44) den Flansch (46) berühren können, um die Dichtung an dem Flansch (46) zu halten.

5. System nach Anspruch 3 oder 4, bei dem der fensterteilaufnehmende Kanal (48) zwei Finger (52, 54) aufweist, die sich von gegenüberliegenden Seiten des Kanals (48) aus von der Haut (41) weg erstrecken, wobei die Finger (52, 54) zum Berühren und Abdichten des Teils (50) dienen.

## Revendications

1. Système d'étanchement destiné à supporter et à rendre étanche une vitre de fenêtre (14, 15) d'une porte (12, 13) de véhicule, dans lequel la porte (12, 13) ne comporte pas de châssis de fenêtre, le système d'étanchement comprenant une bande latérale de calfeutrage (32, 34) ayant :
un moyen de retenue destiné à maintenir la bande de calfeutrage sur un rebord s'étendant autour d'une ouverture ménagée dans le véhicule dans une direction généralement parallèle à la vitre de fenêtre (14, 15), ledit moyen de retenue comportant un canal (42) de réception de rebord destiné à recevoir le rebord (46), un moyen de retenue de vitre de fenêtre destiné à maintenir et à rendre étanche une vitre de fenêtre (14), ledit moyen de retenue de vitre de fenêtre comportant un canal (48) de réception d'élément de fenêtre destiné à recevoir un élément de fenêtre (40) fixé à la vitre de fenêtre (14), et
un moyen d'étanchement (20) pour fournir un étanchement et un espacement entre le périmètre de la vitre de fenêtre (14) et l'ouverture afin d'empêcher un contact entre la vitre de fenêtre (14) et l'ouverture,
caractérisé en ce que :
ledit canal de réception d'élément de fenêtre (48) est placé en étant généralement perpendiculaire audit canal (42) de réception de rebord et au plan de ladite vitre de fenêtre (14) de sorte que ledit moyen de retenue de vitre de fenêtre est pratiquement caché de la vue lorsqu'il est accouplé à ladite vitre de fenêtre (14) dans la position fermée, et en ce que
le moyen d'étanchement (20) comprend un bourrelet destiné à entourer le périmètre de la vitre de fenêtre (14) dans une première position dans laquelle la porte (12, 13) du véhicule est fermée mais n'entoure plus le périmètre lorsque la vitre (14) est déplacée vers l'extérieur jusqu'à une seconde position dans laquelle la porte (12, 13) du véhicule est ouverte.

2. Système d'étanchement selon la revendication 1, dans lequel le moyen de retenue est destiné à maintenir la bande de calfeutrage (32, 34) sur un seul rebord d'extrémité (46), et dans lequel le moyen de retenue comprend un seul canal (42) de réception de rebord.

3. Système selon la revendication 1 ou 2, comprend en outre un élément de renforcement (40) et une peau en élastomère (41) entourant ledit élément de renforcement (40), ledit élément de renforcement (40) et la peau en élastomère (41) formant ledit canal (42) de réception de rebord et ledit canal (48) de réception d'élément de fenêtre.

4. Système selon la revendication 3, dans lequel ledit moyen de retenue comprend un ou plusieurs doigts (44) s'étendant à partir de ladite peau (41) dudit canal (42) de réception de rebord, lesdits doigts (44) étant destinés à être en contact avec ledit rebord (46) pour maintenir ladite bande de calfeutrage sur ledit rebord (46).

5. Système selon la revendication 3 ou 4, dans lequel ledit canal (48) de réception d'élément de fenêtre comprend une paire de doigts (52, 54) s'étendant à partir de ladite peau (41) à partir des côtés opposés dudit canal (48), lesdits doigts (52, 54) étant destinés à être en contact avec l'élément (50) et à le rendre étanche.
